# EUROPEAN PATENT SPECIFICATION

(11) **EP 1 376 031 B1**
(45) Date of publication and mention of the grant of the patent: **12.10.2016**
(21) Application number: 03011346.8
(22) Date of filing: 19.05.2003
(51) Int. Cl.: F25B 5/02, F25D 11/02

(54) **Method for controlling operation of cooling system having two evaporators**
Verfahren zum Steuern des Betriebes einer Kühlanlage mit zwei Verdampfern
Procédé de commande de l'opération d'un système de refroidissement avec deux évaporateurs

(30) Priority: 26.06.2002 KR 2002035998; 01.08.2002 KR 2002045591
(43) Date of publication of application: 02.01.2004
(73) Proprietor: LG Electronics, Inc., Seoul 150-010 (KR)
(72) Inventor: Chung, Eui Yeop, Seoul (KR); Lee, Tae Hee, Seoul (KR); Kim, Se Young, Seoul (KR); Kim, Kyung Sik, Inchon-kwangyokshi (KR); Kim, Yang Gyu, Seoul (KR); Lee, Hi Chol, Gunpo-shi, Kyonggi-do (KR)
(74) Representative: Diehl & Partner GbR

(56) References cited:
- EP-A- 1 087 186
- EP-A- 1 106 943
- WO-A-02/46668
- GB-A- 2 123 992
- GB-A- 2 144 838
- JP-A- 2000 220 939
- JP-A- 2001 082 850

## Description

### BACKGROUND OF THE INVENTION

### Field of the Invention

The present invention relates refrigerators, and more particularly, to a method for controlling operation of a refrigerator having two evaporators.

### Background of the Related Art

The refrigerator is provided with a cabinet having a plurality of food chambers, and a cooling cycle system for cooling the food chambers, for fresh storage of the food for a long time.

In general, in the food chambers, there are a refrigerating chamber of fresh storage of the food at a temperature lower than a room temperature but higher than zero, and a freezing chamber for storage of the food at a temperature below zero. Though the refrigerating chamber and the freezing chamber are cooled by a cooling cycle having one evaporator, recently, the refrigerating chamber and the freezing chamber are cooled separately by a cooling cycle having two evaporators provided to the refrigerating chamber and the freezing chamber respectively, for making features of the refrigerating chamber and the freezing chamber more distinctive and improving cooling performances.

The cooling system with the two evaporators has a structure in which a refrigerant pipeline the refrigerant passed through a compressor and a condenser flows therein is branched such that the refrigerant pipeline is respectively connected to an F-evaporator provided to the freezing chamber and a R-evaporator provided to the refrigerating chamber, and a flow control valve is provided at a point of the branch for controlling a direction of flow of the refrigerant. Therefore, the flow control valve is controlled to make the refrigerant to flow to the F-evaporator or the R-evaporator, for selective cooling one of the two food chambers of the refrigerating chamber and the freezing chamber.

In general, the cooling system with two evaporators is operative such that the compressor comes into operation to cool down a relevant chamber when one of temperatures of the refrigerating chamber and the freezing chamber meets an upper limit temperature preset at a controlling part, and the compressor is stopped when the temperature meets a lower limit temperature preset at the controlling part. By repeating such an operation, the temperatures of the food chambers are maintained within temperature ranges preset at the controlling part.

However, the foregoing operation control has a problem in that operation of the compressor is repeated frequently because, if the temperature of one of the refrigerating chamber and the freezing chamber rises above the preset temperature of the chamber, the compressor comes into operation to cool only the chamber. That is, even though, when the compressor comes into operation due to rise of the temperature of the freezing chamber above the preset temperature, the freezing chamber is cooled down until the temperature of the freezing chamber drops below the preset temperature, when the compressor stops to stop cooling down of the freezing chamber, the temperature of the freezing chamber rises again within a short time period to cause operation of the compressor again, resulting in repetitive intermittent operation of the compressor.

The frequent intermittent operation of the compressor causes to increase a system pressure loss, to consume much power for an initial starting of the compressor, and increase a power consumption.

In the meantime, in a case, after one cycle is carried out for supplying the refrigerant to one of the two evaporators, if the other cycle is carried out, the cooling system with the two evaporators results in shortage of refrigerant at the evaporator of the other cycle due to failure of supply of an adequate amount of refrigerant to the evaporator of the other cycle at an initial stage of operation. In this instance, even if the fan blows air toward the evaporator in the related art operation control, the cooling down is poor due to the refrigerant shortage at the initial operation stage of the other cycle. This is because of delay of a time required for the other cycle reaching to a steady state caused by an increased thermal load that accelerates the shortage of the refrigerant coming from significant increase of a temperature of the refrigerant at an outlet in comparison to the same at an inlet when the refrigerant vaporizes in a state there is a shortage of the refrigerant in the evaporator. Consequently, the evaporator fails to supply sufficient cold air required for cooling down to the refrigerating chamber and the freezing chamber. The delay of a time required for reaching to a steady state of the cycle at an initial stage of operation or shifting of the cooling cycle causes reduction of a cooling performance of the cooling system.

Moreover, after a cycle for supplying refrigerant with one of the two evaporator is carried out, if the other cycle for supplying refrigerant with the other evaporator is carried out, the cooling system with the two evaporators has a problem in that the refrigerant already introduced into the evaporator supply of refrigerant thereto is stopped remains therein. That is, in a case a R-cycle is carried out in which the refrigerant is supplied to the R-evaporator after an F-cycle is carried out in which the refrigerant is supplied to the F-evaporator, the refrigerant introduced into the F-evaporator already remains in the F-evaporator almost in a liquid phase without movement while the R-cycle is carried out. Since this phenomenon occurs also in stopping of the R-cycle and operation of the compressor, if there is no extra device or method applied for recovering the remained refrigerant, there is liquid phase refrigerant remained in one of the two evaporators.

Therefore, because the refrigerant remained in the evaporator after finish of one cycle can not be recovered to the compressor fully, there is shortage of refrigerant in carrying out the other cycle, which deteriorates a relative cooling performance.

Moreover, the introduction of the liquid phase refrigerant into the compressor from the evaporator in re-starting of the compressor impedes compression of the refrigerant in the cylinder of the compressor, and causes a lubrication problem, to fail to secure a reliability of the compressor.

Document EP 1 106 943 A discloses a fridge freezer combination providing a separate evaporator for the freezing and for the refrigeration compartment. For avoiding a degradation of the cooling efficiency when switching from a freezer cooling cycle to a refrigerator cooling cycle due to the delay in the refrigerant behavior upon the transition, the passage to the freezer evaporator is blocked at the end of a freezer cooling cycle before opening the passage to the refrigerator evaporator while the compressor continues running in order to recover the refrigerant from the refrigerator evaporator and feeding it to the compressor.

Document JP 2000 220939 A discloses a fridge freezer combination providing a separate evaporator for the freezing and for the refrigeration compartment. The cooling circuit of the fridge freezer combination comprise a separate evaporator for the freezing and for the refrigeration compartment, with both evaporators connected in series, and a bypass for bypassing one of the evaporators. A cooling cycle always starts with in refrigeration mode even when the freezing compartment initiates the cooling cycle. When the transition is made from refrigeration mode to freezing mode, the freezing mode is sustained until the OFF temperature is reached in the freezer compartment.

### SUMMARY OF THE INVENTION

Accordingly, the present invention is directed to a method for controlling operation of a refrigerator having two evaporators that substantially obviates one or more of the problems due to limitations and disadvantages of the related art.

An object of the present invention devised for solving the foregoing problems lies on providing a method for controlling operation of a refrigerator having two evaporators, in which intermittent operation periods of the compressor set longer for reducing a pressure loss and power consumption of a cooling system.

Another object of the present invention is to provide a method for controlling operation of a refrigerator having two evaporators, in which a time period required for reaching to a steady state of the cooling cycle from an initial stage of starting, or conversion of operation of the cooling cycle.

Further object of the present invention is to provide a method for controlling operation of a refrigerator having two evaporators which can prevent shortage of the refrigerant occurred in the evaporator in an initial stage of starting, or conversion of operation of the cooling cycle.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the Method for controlling operation of a refrigerator having two evaporators, in which a flow control valve is controlled for selectively carrying out an F-cycle for making refrigerant to flow from a compressor to an F-evaporator for cooling down a freezing chamber or a R-cycle for making the refrigerant to flow to a R-evaporator for cooling down a refrigerating chamber, includes the steps of (a) if one of temperatures of the freezing chamber and the refrigerating chamber meets an upper limit temperature of the freezing chamber or the refrigerating chamber relevant to the one of temperatures preset at a controlling part, putting the compressor into operation and controlling the flow control valve for carrying out the F-cycle or the R-cycle relevant to the one of temperatures, (b) if the one of temperatures meets a lower limit temperature of the freezing chamber or the refrigerating chamber relevant to the one of temperatures preset at the controlling part as the F-cycle or the R-cycle relevant to the one of temperatures is progressed, controlling the flow control valve for shifting from the F-cycle or the R-cycle relevant to the one of the temperatures to the F-cycle or the R-cycle not relevant to the one of temperatures, and (c) if the other one of temperatures of the freezing chamber and the refrigerating chamber meets the lower limit temperature relevant to the other one of temperatures as the F-cycle or the R-cycle relevant to the other one of temperatures is progressed, stopping the compressor.

The step (a) includes the steps of (a1) putting the compressor into operation and controlling the flow control valve for guiding the refrigerant to the F-evaporator or the R-evaporator relevant to the temperature, and (a2) putting an F-fan which blows air to the F-evaporator or a R-fan which blows air to the R-evaporator relevant to the temperature into operation when a preset time period is passed after finish of the step (a1).

The step (b) includes the steps of (b1) controlling the flow control valve for shifting the F-cycle or the R-cycle relevant to the temperature to the F-cycle or the R-cycle not relevant to the temperature, and (b2) putting an F-fan which blows air to the F-evaporator or a R-fan which blows air to the R-evaporator relevant to the temperature into operation when a preset time period is passed after finish of the step (b1). The step (b) further includes the step of operating the compressor for a preset time period in a state the flow control valve is closed when the F-cycle or the R-cycle relevant to the temperature is shifted to the F-cycle or the R-cycle not relevant to the temperature.

In another aspect of the present invention, there is provided a method for controlling operation of a refrigerator having two evaporators, in which a flow control valve is controlled for selectively carrying out an F-cycle for making refrigerant to flow from a compressor to an F-evaporator for cooling down a freezing chamber or a R-cycle for making the refrigerant to flow to a R-evaporator for cooling down a refrigerating chamber, including the steps of (d) always carrying out the R-cycle at the same time with putting the compressor into operation, (e) if a temperature of the refrigerating chamber meets a lower limit temperature of the refrigerating chamber preset at a controlling part as the R-cycle is progressed, controlling the flow control valve to shift to the F-cycle, and (f) if a temperature of the freezing chamber meets the lower limit temperature of the freezing chamber preset at the controlling part as the F-cycle is progressed, stopping the compressor.

The step (d) includes the steps of (d1) controlling the flow control valve for making the refrigerant to flow through the R-evaporator at the same time with putting the compressor into operation, and (d2) putting the R-fan which blows air toward the R-evaporator, when a preset time period is passed after the step (d1) is finished.

The step (e) includes the steps of (e1) controlling the flow control valve for shifting from the R-cycle to the F-cycle, and (e2) when a preset time period is passed after the step (e1) is finished, putting the F-fan which blows air to the F-evaporator into operation. The step (e) further includes the step of operating the compressor for a preset time period in a state the flow control valve is closed in shifting from the R-cycle to the F-cycle.

In further aspect of the present invention, there is provided a method for controlling operation of a refrigerator having two evaporators, in which a flow control valve is controlled for selectively carrying out an F-cycle for making refrigerant to flow from a compressor to an F-evaporator for cooling down a freezing chamber or a R-cycle for making the refrigerant to flow to a R-evaporator for cooling down a refrigerating chamber, including the steps of (g) controlling the flow control valve for carrying out the F-cycle or the R-cycle at the same time with putting the compressor into operation, and (h) putting a fan into operation, which blows air to the F-evaporator or the R-evaporator relevant to a carried out cycle, when a preset time period is passed after finish or the step (g).

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention:
In the drawings:
   FIG. 1 illustrates a diagram of a cooling system having two evaporators;
   FIG. 2 illustrates a diagram of a cooling cycle in which a freezing cycle and a refrigerating cycle are carried out in succession in an operation controlling method in accordance with a preferred embodiment of the present invention;
   FIG. 3 illustrates a graph showing temperature vs. time in the diagram in FIG. 2;
   FIG. 4 illustrates a diagram of a cooling cycle in which a refrigerating cycle and a freezing cycle are carried out in succession in an operation control method in accordance with a preferred embodiment of the present invention;
   FIG. 5 illustrates a graph showing temperature vs. time in the diagram of FIG. 4;
   FIG. 6 illustrates a diagram showing operative relation of a flow control valve vs. a compressor in carrying out a cooling cycle in an operation control method in accordance with a preferred embodiment of the present invention; and
   FIG. 7 illustrates a diagram showing operative relation of cooling fans in carrying out a cooling cycle in an operation control method in accordance with a preferred embodiment of the present invention.

### DETAILED DESCRIPTION OF THE PREFERRED EMBODIMENT

Reference will now be made in detail to the preferred embodiments of the present invention, examples of which are illustrated in the accompanying drawings. In describing embodiments of the present invention, the same parts will be given the same names and reference symbols, and repetitive description of which will be omitted.

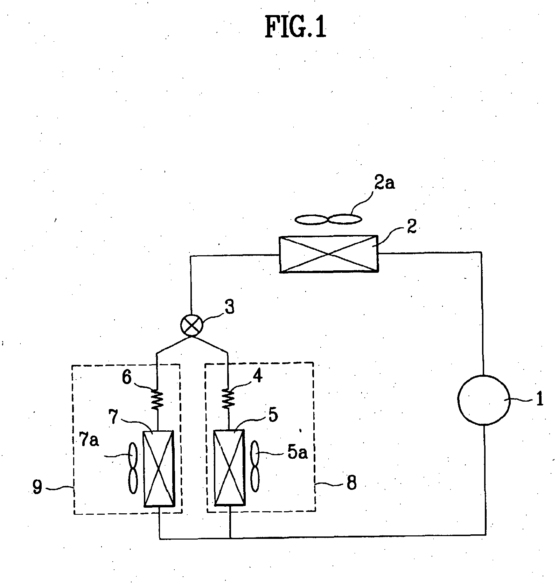

Before starting description of a method for controlling operation of a refrigerator having two evaporators, a system of refrigerator having two evaporators will be described with reference to FIG. 1.

Referring to FIG. 1, in general the refrigerator having two evaporators includes a compressor 1, a condenser 2, a flow control valve 3, two expansion devices 4 and 6, and two evaporators 5 and 7.

The compressor 1 and the condenser 2 are connected with a refrigerant tube, and a condenser fan 2a is provided to blow air toward the condenser 2. a refrigerant tube connected to an outlet of the condenser 2 is branched from one point connected to an F-expansion device 4 and a R-expansion device 6. The flow control valve 3 is provided to the branch point of the refrigerant tube. The F-evaporator 5 is connected to the F-expansion device 4, the R-evaporator 7 is connected to the R-expansion device 6, and the F-fan 5a and the R-fan 7a are provided in the vicinity of the F-evaporator 5 and the R-evaporator 7. Outlets of the F-evaporator 5 and the R-evaporator 7 are connected to an inlet of the compressor 1.

In the cooling system having two evaporators, the F-expansion device 4, the F-evaporator 5, and the F-fan 5a are provided to cool down the freezing chamber 8, and the R-expansion device 6, the R-evaporator 7, and the R-fan 7a are provided to cool down the refrigerating chamber 9. The freezing chamber 8 and the refrigerating chamber 9 are provided with temperature sensors (not shown), respectively.

The refrigerator having two evaporators selectively carries out an F-cycle (a freezing cycle) in which the refrigerant compressed in the compressor 1 has a circulation path of being passed through the condenser 2, the flow control valve 3, the F-expansion device 4 and the F-evaporator 5 and introduced into the compressor 1 for cooling down the freezing chamber 8, and a R-cycle (refrigerating cycle) in which the refrigerant compressed in the compressor 1 has a circulation path of being passed through the condenser 2, the flow control valve 3, the R-expansion device 6 and the R-evaporator 6 and introduced into the compressor 1 for cooling down the refrigerating chamber 9. The flow direction of the refrigerant is changed as a controlling part controls the flow control valve 3.

An operation control method of a refrigerator having two evaporators which can selectively carry out the F-cycle and the R-cycle is as follows.

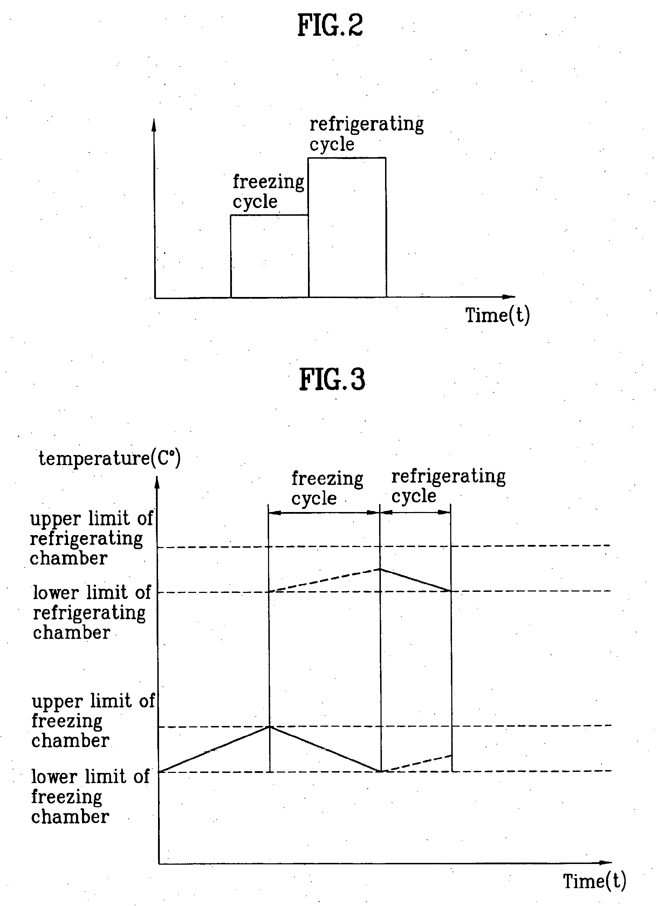

In the operation control method of the refrigerator of the present invention, the compressor 1 is controlled so that a consecutive operation of the F-cycle and the R-cycle or the R-cycle and the F-cycle can be made, for prolonging an intermittent operation period of the compressor 1, which will be described in detail with reference to FIGS. 2 to 5.

At first, a step (a) is carried, in which the compressor 1 is put into operation if one of temperatures of the freezing chamber 8 and the refrigerating chamber 9 meets an upper limit temperature of the freezing chamber 8 or the refrigerating chamber 9 relevant to the one of temperatures preset in the controlling part, and at the same time with this, the flow control valve 3 is controlled so as to carry out the F-cycle or the R-cycle relevant to the one of the temperatures. For an example, as shown in FIGS. 2 and 3, if the temperature of the freezing chamber 8 meets the upper limit temperature of the freezing chamber preset at the controlling part, the compressor 1 is put into operation, and at the same time with this, the flow control valve 3 is controlled so as to make the refrigerant to flow toward the F-evaporator 5.

Next, if the one of temperatures of the freezing chamber 8 and the refrigerating chamber 9 meets the lower limit temperature of the freezing chamber 8 or the refrigerating chamber 9 relevant to the one temperature preset at the controlling part, as one of the F-cycle and the R-cycle relevant to the one of temperatures is progressed, a step (b) for shifting to the F-cycle or the R-cycle not relevant to the one of temperatures is carried out by controlling the flow control valve 3. For an example, as shown in FIGS. 2 and 3, if the temperature of the freezing chamber 8 meets the lower limit temperature of the freezing chamber as the temperature of the freezing chamber 8 drops following carrying out of the F-cycle, the flow control valve 3 is controlled so as to make the refrigerant to flow toward the R-evaporator 7. In this instance, since the R-cycle is not carried out for cooling down the refrigerating chamber 9, the temperature of the refrigerating chamber 9 rises slowly as shown in FIG. 3. The present invention suggests carrying out the R-cycle after finish of the F-cycle consecutively for cooling down the refrigerating chamber even if the temperature of the refrigerating chamber 9 does not meet the preset upper limit temperature of the refrigerating chamber 9.

Next, if the other one of temperatures of the freezing chamber 8 and the refrigerating chamber 9 meets the lower limit temperature of the freezing chamber 8 or the refrigerating chamber 9 relevant to the other one of temperatures preset at the controlling part as the other cycle shifted thereto is progressed, a step (c) for stopping the compressor 1 is carried out. For an example, as shown in FIG. 2 and 3, as the R-cycle is progressed after the consecutive shifting from the F-cycle to the R-cycle, a temperature of the refrigerating chamber 9 drops until the temperature of the refrigerating chamber 9 meets the preset lower limit temperature of the refrigerating chamber 9 when the compressor 1 is stopped.

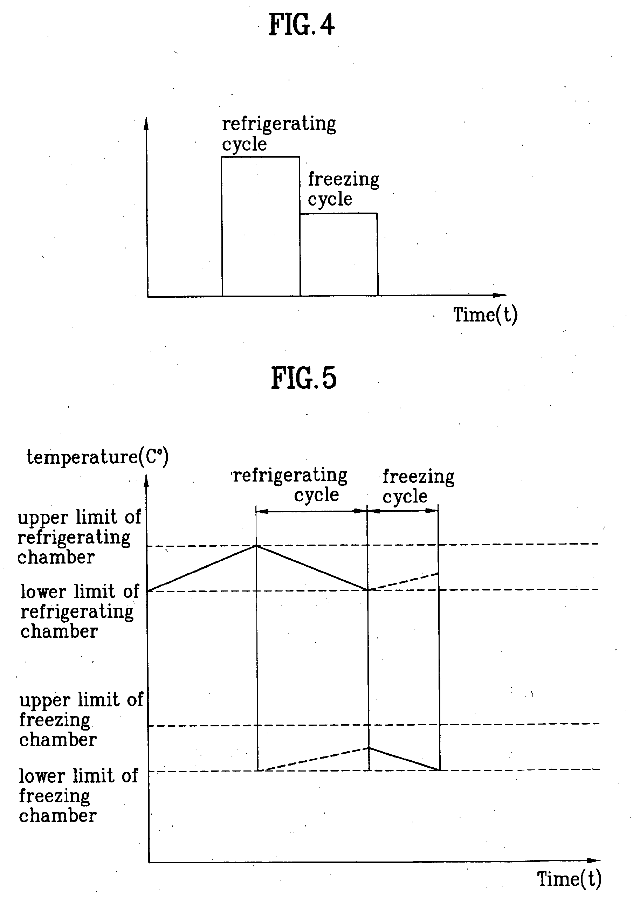

In the meantime, according to the one preferred embodiment of the present invention, if the temperature of the refrigerating chamber 9 meets the upper limit temperature of the refrigerating chamber in a state the compressor 1 is stopped, as shown in FIGS. 4 and 5, the compressor 1 comes into operation to carry out the R-cycle, and if the temperature of the refrigerating chamber 9 meets the lower limit temperature of the refrigerating chamber 9 as the R-cycle is progressed, the F-cycle is carried out consecutively. Thus, the consecutive operation of the R-cycle and the F-cycle is similar to the consecutive operation of the F-cycle and the R-cycle, a detailed description will be omitted.

As described, in the method in accordance with one embodiment of the present invention shown in FIGS. 2 to 5, an intermittent operation period of the compressor 1 is extended by putting the compressor 1 into operation when one of temperatures of the refrigerating chamber 9 or the freezing chamber 8 meets the upper limit temperature of the freezing chamber 8 or the refrigerating chamber 9 relevant to the one of temperatures and cooling down the freezing chamber 8 or the refrigerating chamber 9 relevant to the one of temperatures, and consecutively cooling down the other chamber. The extension of the intermittent operation period of the compressor 1 can reduce power consumption, pressure loss inside of the system, and temperature ranges of the freezing chamber and the refrigerating chamber smaller than the related art, to permit fresh storage of food.

In the meantime, the present invention can control the cooling cycles to be always carried out in an order of the R-cycle and the F-cycle. That is, this case includes a step (d) for always carrying out the R-cycle at the same time with putting the compressor 1 into operation, a step (e) for controlling the flow control valve 3 to shift to the F-cycle from the R-cycle if the temperature of the refrigerating chamber 9 meets the lower limit temperature of the refrigerating chamber preset at the controlling part as the R-cycle is progressed, and a step (f) for stopping the compressor 1 if the temperature of the freezing chamber 8 meets the lower limit temperature of the freezing chamber preset at the controlling part as the F-cycle is progressed. The reason that a control is made so as to carry out the R-cycle before the F-cycle always is as follows.

In general, if a temperature of the refrigerant flowing inside of a refrigerant tube is low, a pressure of the refrigerant is also low, and vice versa. Since the temperature of the freezing chamber 8 is in general lower than the temperature of the refrigerating chamber 9, a temperature of the refrigerant carrying out the F-cycle while passing through the F-evaporator 5 is lower than a temperature of the refrigerant carrying out the R-cycle while passing through the R-evaporator 7. The refrigerant flows from a high pressure side toward a low pressure side. Meanwhile, there is refrigerant remained in the F-evaporator 5, if the cooling cycle is shifted from the F-cycle to the R-cycle after the F-cycle is carried out at first. Since the temperature and pressure of the refrigerant remained in the F-evaporator 5 are lower than the temperature and pressure of the refrigerant introduced into the compressor 1 after passing through the R-evaporator 7, the refrigerant remained in the F-evaporator 5 is not introduced to the compressor 1 by a pressure difference, but remained in the F-evaporator 5 continuously, to cause shortage of the refrigerant in carrying out the R-cycle. Opposite to this, if the cooling cycle is shifted from the R-cycle to the F-cycle after the R-cycle is carried out at first, since the temperature and pressure of the refrigerant remained in the R-evaporator 7 are higher than the temperature and pressure of the refrigerant introduced into the compressor 1 after passing through the F-evaporator 5, the refrigerant remained in the R-evaporator 7 is introduced into the compressor 1 by a pressure difference naturally, thereby causing no shortage of the refrigerant. Under above reason, the present invention suggests carrying out the R-cycle at first in putting the compressor 1 into operation and shifting to F-cycle, for prevention of the shortage of the compressor 1.

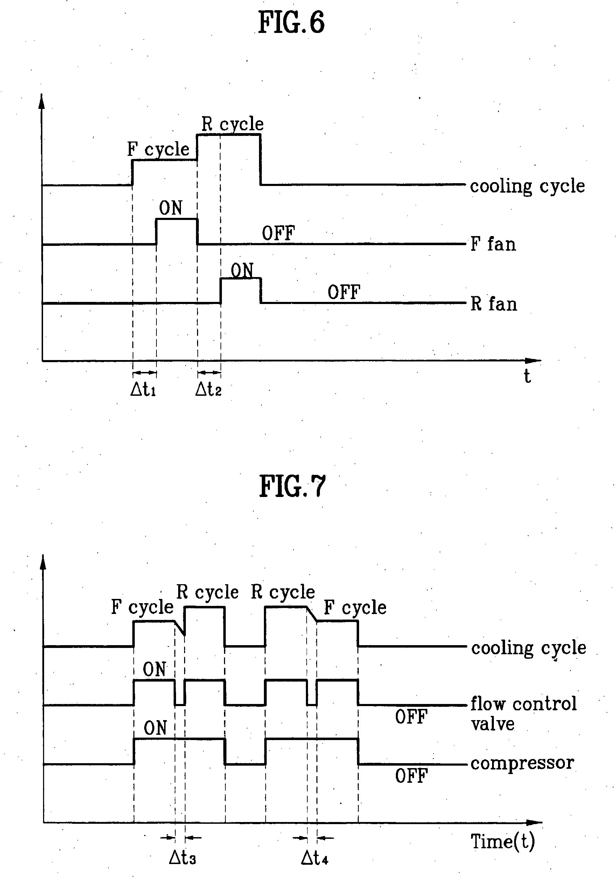

In the meantime, the present invention provides a control method in which an evaporator is made to reach to a steady state within a shorter time period by delaying rotation of the fan blowing air toward the evaporator temporarily at an initial stage of operation or shifting of the cooling cycle. To do this, the present invention suggests the step (a) or step (d) includes a step (a1) or (d1) for controlling the flow control valve so that the refrigerant is lead to one of the F-evaporator 5 or the R-evaporator 7 at the same time with putting the compressor 1 into operation, and a step (a2) or (d2) for operating one of the F-fan 5a for blowing air to the F-evaporator 5 or the R-fan 7a for blowing air to the R-evaporator 7 when a predetermined time period is passed after finish of the step (a1) or (d1). The step (b) or (e) includes a step (b1) or (e1) for controlling the flow control valve 3 so that the cooling cycle is shifted from one of the F-cycle and the R-cycle to the other, and a step (b2) or (e2) for operating one of the F-fan 5a for blowing air toward the F-evaporator 5 and the R-fan 7a for blowing air toward the R-evaporator 7. The operation of the refrigerator having the control method of the present invention applied thereto will be described with reference to FIGS. 1 to 6. As shown in FIG. 6, an example, the F-cycle is carried out at first, and the R-cycle is carried out consecutively will be described.

When the temperature of the freezing chamber 8 meets the preset upper limit temperature of the freezing chamber, the compressor 1 comes into operation, and the refrigerant compressed at the compressor 1 is condensed as the refrigerant passes through the condenser 2. Since the flow control valve 3 is controlled at the same time with putting the compressor 1, the refrigerant is introduced into the F-evaporator 5. In this instance, as shown in FIG. 6, in the present invention, operation of the F-fan 5a is delayed for a preset time period 't1'. Rotation of the F-fan 5a is thus delayed for the preset time period t1 after the compressor 1 is put into operation, because of the following reasons.

In general, a quantity of the refrigerant introduced into the evaporator 5 or 7 is not adequate at the initial stage of operation of the compressor 1 or initial stage of cycle shifting. Therefore, if the fan 5a or 7a is put into operation to flow air to the evaporator 5 or 7 in a state the refrigerant introduced into the evaporator 5 or 7 is not adequate, a thermal load of the evaporator 5 and 7 becomes higher as heat exchange is progressed at the evaporator 5 or 7, to accelerate the shortage of the refrigerant in the evaporator 5 or 7, and delay a time period of the evaporator 5 or 7 required for reaching to a steady state. The failure of the evaporator 5 or 7 in reaching to the steady state causes a poor performance. Therefore, it is preferable that the heat exchange of the evaporator 5 or 7 is delayed at the initial stage of starting of the compressor 1 or initial stage of cycle shifting for resolving the shortage of the refrigerant in the evaporator 5 or 7 quickly and leading the evaporator 5 or 7 to a steady state quickly. Under this reason, the present invention suggests controlling that rotation of the F-fan 5a which blows air to the evaporator 5 or 7 is delayed for the predetermined period t1 at the initial stage of starting of the compressor 1 or initial stage of cycle shifting.

When the evaporator 5 or 7 reaches to a steady state as the predetermined time period t1 is passed to fill adequate refrigerant to the evaporator 5 and 7, the F-fan 5a is rotated to blow air toward the F-evaporator 5. When the F-fan 5a rotates to blow air toward the F-evaporator 5, the refrigerant in the F-evaporator 5 is vaporized and is made to heat exchange with the air blown thereto, and the heat exchanged cooled air is supplied to the freezing chamber 8, for cooling down the freezing chamber 8.

If the temperature of the freezing chamber 8 meets the lower limit temperature of the freezing chamber 8 as the cooling down of the freezing chamber 8 is progressed, the flow control valve 3 is controlled, to introduce the refrigerant into the R-evaporator 7. As shown in FIG. 6, at the initial stage of shifting from the F-cycle to the R-cycle following the control of the flow control valve 3, rotation of the R-fan 7a is delayed for a predetermined time period t2. As described, if the rotation of the R-fan 7a is delayed thus, the R-evaporator 7 reaches to the steady state quickly. On the other hand, the rotation of the F-fan 5a is stopped at the same time with the shifting of the F-cycle to the R-cycle.

If the R-evaporator 7 reaches to the steady state as the predetermined time period t2 is passed, the R-fan 7a starts to rotate to blow air to the R-evaporator 7, and the air heat exchanges at the R-evaporator 7 and supplied to the refrigerating chamber 9, to cool down the refrigerating chamber 9. When the temperature of the refrigerating chamber 9 meets a lower limit temperature of the refrigerating chamber 9 as the cooling down of the refrigerating chamber 9 is progressed, the compressor 1 and the R-fan 7a are stopped.

Above refrigerator operation control facilitates the quick reaching of the evaporator 5 or 7 to the steady state by making temporary delay of the heat exchange between the refrigerant and the air despite of the shortage of the refrigerant introduced into the evaporator 5 or 7 at the initial stage of operation or cycle shifting, which permits to shorten a steady cooling time period, that improves an efficiency of the cooling at the end.

Because the operation control method of the present invention described with reference to FIG. 6 is applicable not only to the shifting from the F-cycle to the R-cycle, but also to the shifting from the R-cycle to the F-cycle, detailed description of which will be omitted.

Meanwhile, the present invention suggests a control method for more effective prevention of the refrigerant shortage occurred at the evaporator 5 or 7 at the initial stage of operation of cooling cycle shifting. The control method of the present invention includes a step for operating the compressor 1 for a preset time period t3 in a state the flow control valve 3 is closed at the time of shifting from one of the F-cycle and the R-cycle to the other, which will be described with reference to FIGS. 1 and 7.

When the compressor 1 is put into operation and the flow control valve 3 is controlled, to carry out the F-cycle in which the refrigerant flows toward the F-evaporator 5, the freezing chamber 8 is cooled down to drop the temperature of the freezing chamber 8.

As shown in FIG. 7, when the temperature of the freezing chamber 8 meets the lower limit temperature of the freezing chamber 8 as the F-cycle is progressed for a preset time period, the flow control valve 3 is closed for a preset time period t3 in a state the compressor 1 is in operation. The operation of the compressor 1 in a state the flow control valve 3 is closed for a preset time period t3 causes flow of most of the refrigerant remained in the F-evaporator 5 to the compressor 1.

When the flow control valve 3 is controlled after pass of the preset time period t3, the refrigerant flows toward the R-evaporator 7 to carry out the R-cycle and cool down the refrigerating chamber 9. When the temperature of the refrigerating chamber 9 meets the lower limit temperature of the refrigerating chamber as the R-cycle is progressed for a preset time period, the compressor 1 is stopped.

Moreover, referring to FIG. 7, also in the consecutive operation of the R-cycle and the F-cycle, the shortage of refrigerant can be prevented by causing the refrigerant remained in the R-evaporator 7 to flow into the compressor 1 at the initial stage of cycle shifting by an identical method.

In the meantime, the present invention is applicable, not only to a case the compressor 1 is operated intermittently only when the upper limit temperature or the lower limit temperature of the refrigerating chamber 9 or the freezing chamber 8 are met, but also to a case the compressor 1 is operated intermittently depending on other different parameters. This case includes a step (g) for controlling the flow control valve 3 so as to carry out one of the F-cycle or the R-cycle at the same time with putting the compressor 1 into operation, and a step (h) for putting one of the fans which blows air to relevant one of the F-evaporator and the R-evaporator when the preset time period is passed after finish of the (g) step.

As has been described, the present invention, suggesting the method for controlling operation of a refrigerator having two evaporators, has the following advantages.

First, the extension of the intermittent operation time period of the compressor can reduce power consumption at an initial stage of compressor operation, and a pressure loss in the system.

Second, the stable maintenance of the refrigerating chamber and the freezing chamber temperatures within fixed temperature ranges more than the related art permits fresh and prolonged time storage of the food.

Third, the recovery of the refrigerant remained in the evaporator at the time of shifting of the cooling cycle can prevent the shortage of refrigerant, that improves a cooling efficiency and secure reliability of the compressor.

Fourth, the delay of rotation of the fan for a preset time period at the initial stage of operation or shifting of the cooling cycle permits the evaporator to reach to a steady state more quickly, which improves the cooling performance of the cooling system.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

Summarized, a method for controlling operation of a refrigerator having two evaporators is described, in which a flow control valve is controlled for selectively carrying out an F-cycle for making refrigerant to flow from a compressor to an F-evaporator for cooling down a freezing chamber or a R-cycle for making the refrigerant to flow to a R-evaporator for cooling down a refrigerating chamber, including the steps of (a) if one of temperatures of the freezing chamber and the refrigerating chamber meets an upper limit temperature of the freezing chamber or the refrigerating chamber relevant to the one of temperatures preset at a controlling part, putting the compressor into operation and controlling the flow control valve for carrying out the F-cycle or the R-cycle relevant to the one of temperatures, (b) if the one of temperatures meets a lower limit temperature of the freezing chamber or the refrigerating chamber relevant to the one of temperatures preset at the controlling part as the F-cycle or the R-cycle relevant to the one of temperatures is progressed, controlling the flow control valve for shifting from the F-cycle or the R-cycle relevant to the one of the temperatures to the F-cycle or the R-cycle not relevant to the one of temperatures, and (c) if the other one of temperatures of the freezing chamber and the refrigerating chamber meets the lower limit temperature relevant to the other one of temperatures as the F-cycle or the R-cycle relevant to the other one of temperatures is progressed, stopping the compressor.

## Claims

1. A method for controlling operation of a refrigerator having two evaporators (5,7), in which a flow control valve (3) is controlled for selectively carrying out an F-cycle for making refrigerant to flow from a compressor (1) to an F-evaporator (5) for cooling down a freezing chamber (8) or a R-cycle for making the refrigerant to flow to a R-evaporator (7) for cooling down a refrigerating chamber (9), the method **characterized by** comprising the steps of :
(a) if one of temperatures of the freezing chamber (8) and the refrigerating chamber (9) meets an upper limit temperature of the freezing chamber (8) or the refrigerating chamber (9) relevant to the one of temperatures preset at a controlling part, putting the compressor (1) into operation and controlling the flow control valve (3) for carrying out the F-cycle or the R-cycle relevant to the one of temperatures;
(b) if the one of temperatures meets a lower limit temperature of the freezing chamber (8) or the refrigerating chamber (9) relevant to the one of temperatures preset at the controlling part as the F-cycle or the R-cycle relevant to the one of temperatures is progressed, controlling the flow control valve (3) for shifting from the F-cycle or the R-cycle relevant to the one of the temperatures to the F-cycle or the R-cycle not relevant to the one of temperatures; and
(c) if the other one of temperatures of the freezing chamber (8) and the refrigerating chamber (9) meets the lower limit temperature relevant to the other one of temperatures as the F-cycle or the R-cycle relevant to the other one of temperatures is progressed, stopping the compressor (1).

2. The method according to claim 1, wherein the step (a) includes the steps of:
(a1) putting the compressor (1) into operation and controlling the flow control valve (3) for guiding the refrigerant to the F-evaporator (5) or the R-evaporator (7) relevant to the temperature; and
(a2) putting an F-fan (5a) which blows air to the F-evaporator (5) or a R-fan (7a) which blows air to the R-evaporator (7) relevant to the temperature into operation when a preset time period is passed after finish of the step (a1).

3. The method according to claim 1 or 2, wherein the step (b) includes the steps of:
(b1) controlling the flow control valve (3) for shifting the F-cycle or the R-cycle relevant to the temperature to the F-cycle or the R-cycle not relevant to the temperature, and
(b2) putting an F-fan (5a) which blows air to the F-evaporator (5) or a R-fan (7a) which blows air to the R-evaporator (7) relevant to the temperature into operation when a preset time period is passed after finish of the step (b1).

4. The method according to one of claims 1 to 3, wherein the step (b) further includes the step of:
operating the compressor (1) for a preset time period in a state the flow control valve (3) is closed when the F-cycle or the R-cycle relevant to the temperature is shifted to the F-cycle or the R-cycle not relevant to the temperature.

5. The method according to one of claims 1 to 4, wherein in the step (a), the R-cycle is carried out at the same
time with putting the compressor (1) into operation.

6. A refrigerator comprising:
two evaporators (5,7);
a flow control valve (3) for selectively carrying out an F-cycle for making refrigerant to flow from a compressor (1) to an F-evaporator (5) for cooling down a freezing chamber (8) or an R-cycle for making the refrigerant to flow to a R-evaporator (7) for cooling down a refrigerating chamber (9); and
a controller configured for performing the method according to one of claims 1 to 5.

## Patentansprüche

1. Verfahren zum Steuern des Betriebs eines Kühlschranks mit zwei Verdampfern (5, 7), bei dem ein Durchflusssteuerungsventil (3) so gesteuert wird, dass wahlweise ein G-Zyklus, bei dem zum Kühlen eines Gefrierabteils (8) ein Kühlmittelfluss von einem Kompressor (1) zu einem G-Verdampfer (5) geschaffen wird, oder ein K-Zyklus ausgeführt wird, bei dem zum Kühlen eines Kühlabteils (9) ein Kühlmittelfluss zu einem K-Verdampfer (7) geschaffen wird, wobei das Verfahren **dadurch gekennzeichnet ist, dass** es Schritte aufweist zum:
(a) in Betrieb setzen des Kompressors (1), wenn eine der beiden Temperaturen des Gefrierabteils (8) oder des Kühlabteils (9) eine an einem Steuerungsteil zuvor eingestellte, für die eine der beiden Temperaturen relevante, obere Grenztemperatur des Gefrierabteils (8) oder des Kühlabteils (9) erreicht, und Steuern des Durchflusssteuerungsventils (3), um den für die eine der beiden Temperaturen relevanten G-Zyklus oder K-Zyklus auszuführen,
(b) Steuern des Durchflusssteuerungsventils (3), wenn die eine der beiden Temperaturen im Fortgang des für die eine der beiden Temperaturen relevanten G-Zyklus oder K-Zyklus eine an einem Steuerungsteil zuvor eingestellte, für die eine der beiden Temperaturen relevante, untere Grenztemperatur des Gefrierabteils (8) oder des Kühlabteils (9) erreicht, so, dass von dem für die eine der beiden Temperaturen relevanten G-Zyklus oder K-Zyklus auf den für die eine der beiden Temperaturen nicht relevanten G-Zyklus oder K-Zyklus umgeschaltet wird, und
(c) Abschalten des Kompressors (1), wenn die andere der beiden Temperaturen des Gefrierabteils (8) oder des Kühlabteils (9) im Fortgang des für die andere der beiden Temperaturen relevanten G-Zyklus oder K-Zyklus die für die andere der beiden Temperaturen relevante untere Grenztemperatur erreicht.

2. Verfahren nach Anspruch 1, worin Schritt (a) Schritte umfasst zum:
(a1) in Betrieb setzen des Kompressors (1) und Steuern des Durchflusssteuerungsventils (3) so, dass das Kühlmittel zu dem für die Temperatur relevanten G-Verdampfer (5) oder K-Verdampfer (7) geleitet wird,
(a2) in Betrieb setzen eines für die Temperatur relevanten G-Gebläses (5a), das Luft zu dem G-Verdampfer (5) bläst, oder K-Gebläses (7a), das Luft zu dem K-Verdampfer (7) bläst, wenn nach Abschluss von Schritt (a1) eine vorgegebenen Zeitspanne abgelaufen ist.

3. Verfahren nach Anspruch 1 oder 2, worin Schritt (b) Schritte umfasst zum:
(b1) Steuern des Durchflusssteuerungsventils (3), um von dem für die Temperatur relevanten G-Zyklus oder K-Zyklus auf den für die Temperatur nicht relevanten G-Zyklus oder K-Zyklus umzuschalten, und
(b2) in Betrieb setzen eines für die Temperatur relevanten G-Gebläses (5a), das Luft zu dem G-Verdampfer (5) bläst, oder K-Gebläses (7a), das Luft zu dem K-Verdampfer (7) bläst, wenn nach Abschluss von Schritt (b1) eine vorgegebenen Zeitspanne abgelaufen ist.

4. Verfahren nach einem der Ansprüche 1 bis 3, worin Schritt (b) ferner den Schritt umfasst zum
Betreiben des Kompressors (1) über einen vorgegebenen Zeitraum in einem Zustand mit geschlossenem Durchflusssteuerungsventil (3), wenn von dem für die Temperatur relevanten G-Zyklus oder K-Zyklus auf den für die Temperatur nicht relevanten G-Zyklus oder K-Zyklus umgeschaltet wird.

5. Verfahren nach einem der Ansprüche 1 bis 4, worin in Schritt (a) der K-Zyklus gleichzeitig zum in Betrieb setzen des Kompressors (1) ausgeführt wird.

6. Kühlvorrichtung, die aufweist:
zwei Verdampfer (5, 7),
ein Durchflusssteuerungsventil (3), um wahlweise einen G-Zyklus, bei dem zum Kühlen eines Gefrierabteils (8) ein Kühlmittelfluss von einem Kompressor (1) zu einem G-Verdampfer (5) geschaffen wird, oder einen K-Zyklus auszuführen, bei dem zum Kühlen eines Kühlabteils (9) ein Kühlmittelfluss zu einem K-Verdampfer (7) geschaffen wird, und
eine Steuerung, die zur Durchführung eines Verfahrens nach einem der Ansprüche 1 bis 5 ausgebildet ist.

## Revendications

1. Procédé pour commander le fonctionnement d'un réfrigérateur ayant deux évaporateurs (5, 7), dans lequel une soupape de régulation d'écoulement (3) est commandée pour exécuter sélectivement un cycle F pour amener du fluide frigorigène à s'écouler d'un compresseur (1) à un évaporateur F (5) pour refroidir une chambre de congélation (8) ou un cycle R pour amener le fluide frigorigène à s'écouler jusqu'à un évaporateur R (7) pour refroidir une chambre de réfrigération (9), le procédé étant **caractérisé en ce qu'**il comprend les étapes de :
(a) si l'une des températures de la chambre de congélation (8) et de la chambre de réfrigération (9) atteint une température limite supérieure de la chambre de congélation (8) ou de la chambre de réfrigération (9) applicable à l'une des températures préréglées sur une partie de commande, mettre en marche le compresseur et commander la soupape de régulation d'écoulement (3) pour exécuter le cycle F ou le cycle R applicable à l'une des températures ;
(b) si l'une des températures atteint une température limite inférieure de la chambre de congélation (8) ou de la chambre de réfrigération (9) applicable à l'une des températures préréglées sur la partie de commande lorsque le cycle F ou le cycle R applicable à l'une des températures a progressé, commander la soupape de régulation d'écoulement (3) pour passer du cycle F ou du cycle R applicable à l'une des températures au cycle F ou au cycle R non applicable à l'une des températures ; et
(c) si l'autre des températures de la chambre de congélation (8) et de la chambre de réfrigération (9) atteint la température limite inférieure applicable à l'autre des températures lorsque le cycle F ou le cycle R applicable à l'autre des températures a progressé, arrêter le compresseur (1).

2. Procédé selon la revendication 1, dans lequel l'étape (a) inclut les étapes de :
(a1) mettre en marche le compresseur (1) et commander la soupape de régulation d'écoulement (3) pour guider le fluide frigorigène jusqu'à l'évaporateur F (5) ou l'évaporateur R (7) applicable à la température ; et
(a2) mettre en marche un ventilateur F (5a) qui souffle de l'air à l'évaporateur F (5) ou un ventilateur R (7a) qui souffle de l'air à l'évaporateur R (7) applicable à la température lorsqu'une période de temps préréglée est passée après la fin de l'étape (a1).

3. Procédé selon la revendication 1 ou 2, dans lequel l'étape (b) inclut les étapes de :
(b1) commander la soupape de régulation d'écoulement (3) pour passer du cycle F ou du cycle R applicable à la température au cycle F ou au cycle R non applicable à la température, et
(b2) mettre en marche un ventilateur F (5a) qui souffle de l'air à l'évaporateur F (5) ou un ventilateur R (7a) qui souffle de l'air à l'évaporateur R (7) applicable à la température lorsqu'une période de temps préréglée est passée après la fin de l'étape (b1).

4. Procédé selon l'une des revendications 1 à 3, dans lequel l'étape (b) inclut en outre l'étape de :
faire fonctionner le compresseur (1) pendant une période de temps préréglée dans un état où la soupape de régulation d'écoulement (3) est fermée lorsque le cycle F ou le cycle R applicable à la température est passé au cycle F ou au cycle R non applicable à la température.

5. Procédé selon l'une des revendications 1 à 4, dans lequel à l'étape (a), le cycle R est exécuté en même temps que la mise en marche du compresseur (1).

6. Réfrigérateur comprenant :
deux évaporateurs (5, 7) ;
une soupape de régulation d'écoulement (3) pour exécuter sélectivement un cycle F pour amener du fluide frigorigène à s'écouler d'un compresseur (1) à un évaporateur F (5) pour refroidir une chambre de congélation (8) ou un cycle R pour amener le fluide frigorigène à s'écouler jusqu'à un évaporateur R (7) pour refroidir une chambre de réfrigération (9) ; et
un contrôleur configuré pour mettre en oeuvre le procédé selon l'une des revendications 1 à 5.
